(19) Europäisches Patentamt / European Patent Office / Office européen des brevets

(11) **EP 2 998 765 B1**

(12) **FASCICULE DE BREVET EUROPEEN**

(45) Date de publication et mention
de la délivrance du brevet:
**29.03.2017 Bulletin 2017/13**

(51) Int Cl.:
***G01S 19/20*** (2010.01)

(21) Numéro de dépôt: **15185385.0**

(22) Date de dépôt: **16.09.2015**

(54) **SYSTÈME D'EXCLUSION D'UNE DÉFAILLANCE D'UN SATELLITE DANS UN SYSTÈME GNSS**

SYSTEM ZUM AUSSCHLUSS EINES AUSFALLS EINES SATELLITEN IN EINEM GNSS-SYSTEM

SYSTEM FOR EXCLUDING A FAILURE OF A SATELLITE IN A GNSS SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.09.2014 FR 1402113**

(43) Date de publication de la demande:
**23.03.2016 Bulletin 2016/12**

(73) Titulaire: **THALES
92400 Courbevoie (FR)**

(72) Inventeur: **VERCIER, Nicolas
26027 VALENCE (FR)**

(74) Mandataire: **HAMMES, Pierre et al
Marks & Clerk France
Immeuble Visium
22, avenue Aristide Briand
94117 Arcueil Cedex (FR)**

(56) Documents cités:
**WO-A1-2010/108938**

- **YOUNG RYAN S Y ET AL: "Fault Detection and
Exclusion Using Normalized Solution Separation
and Residual Monitoring Methods",
NAVIGATION, INSTITUTE OF NAVIGATION,
FAIRFAX, VA, US, vol. 50, no. 3, 1 décembre 2003
(2003-12-01), pages 151-170, XP056004434, ISSN:
0028-1522**

**Description**

L'invention concerne le domaine des systèmes de navigation basés sur l'exploitation de signaux émis par plusieurs satellites d'une constellation dite GNSS de l'acronyme anglais « Global Navigation Satellite System ».

L'invention concerne plus précisément les systèmes de navigation hybrides basés à la fois sur un système de positionnement par satellite et sur les informations fournies par une centrale inertielle.

L'invention porte sur un système d'exclusion d'une défaillance d'un satellite intégré au sein d'un tel système de navigation de sorte à exclure les mesures réalisées sur le signal émis par le satellite identifié comme défaillant.

Un récepteur de positionnement par satellites fournit des informations de position et de vitesse du porteur par triangulation à partir des signaux émis par des satellites défilants visibles du porteur. Les informations fournies peuvent être momentanément indisponibles car le récepteur doit avoir en vue directe un minimum de quatre satellites du système de positionnement pour pouvoir faire un point. Elles sont en outre d'une précision variable, dépendant de la géométrie de la constellation à la base de la triangulation, et bruitées car reposant sur la réception de signaux de très faibles niveaux provenant de satellites éloignés ayant une faible puissance d'émission. Mais elles ne souffrent pas de dérive à long terme, les positions des satellites défilant sur leurs orbites étant connues avec précision sur le long terme. Les bruits et les erreurs peuvent être liés aux systèmes satellitaires, au récepteur ou à la propagation du signal entre l'émetteur satellitaire et le récepteur de signaux GNSS. En outre, les données satellites peuvent être erronées par suite de pannes affectant les satellites. Ces données non intègres doivent alors être repérées pour ne pas fausser la position issue du récepteur GNSS.

Pour prévenir les pannes satellites et assurer l'intégrité des mesures GNSS, il est connu d'équiper un récepteur de positionnement par satellites d'un système d'estimation de précision et de disponibilité dit RAIM (de l'anglo-saxon "Receiver Autonomous Integrity Monitoring") qui se base sur la géométrie et la redondance de la constellation de satellites utilisée lors de la triangulation et sur l'évolution prévisible à court terme de cette géométrie déduite de la connaissance des trajectoires des satellites. Cependant, l'algorithme RAIM n'est utilisé que pour des systèmes de localisation par satellites pur et non pour des systèmes de localisation hybrides.

En outre, dans le cas où la géométrie de la constellation GNSS présente certaines configurations particulières, le système RAIM ne permet une exclusion du satellite défectueux qu'une fois que l'erreur de positionnement a atteint une valeur élevée ce qui n'est pas compatible d'un système de navigation embarqué dans un porteur qui nécessite une information de positionnement en temps réel avec une précision élevée.

Enfin, l'algorithme RAIM nécessite au moins 6 satellites en visibilité du récepteur pour pouvoir fonctionner ce qui n'est pas nécessairement le cas.

On connait par ailleurs la technique décrite dans le document WO2010/108938.

L'invention propose un système d'exclusion d'une défaillance d'un satellite adapté à un système de navigation hybride et qui fonctionne même en cas de géométrie dégradée de la constellation des satellites.

L'invention a pour objet, dans un premier mode de réalisation, un système d'exclusion d'une mesure satellite défaillante dans un système de positionnement par satellite, ledit système comprenant :

- Une pluralité N de premiers filtres d'hybridation recevant chacun au moins une mesure de positionnement satellite réalisée sur les signaux reçus par tous les satellites en visibilité dudit système à l'exception d'un satellite, différent pour chaque premier filtre d'hybridation différent, et une mesure de positionnement inertielle et délivrant une mesure de positionnement corrigée, dite mesure hybride,
- une pluralité M de seconds filtres d'hybridation recevant chacun au moins une mesure de positionnement satellite réalisée sur les signaux reçus par tous les satellites en visibilité dudit système et une mesure de positionnement inertielle et délivrant une mesure de positionnement corrigée, dite mesure hybride, les seconds filtres d'hybridation étant mis à jour, à un rythme temporel constant, successivement à des instants temporels décalés périodiquement,
- un module de détection apte à délivrer un instant de détection d'une défaillance d'au moins une mesure de positionnement satellite,
- un module d'exclusion d'une mesure de positionnement satellite défaillante configuré pour :

  ○ sélectionner la mesure hybride la plus ancienne, par rapport à l'instant de détection d'une défaillance, parmi les M mesures hybrides à jour délivrées par les M seconds filtres d'hybridation,
  ○ comparer la mesure hybride sélectionnée, dite mesure hybride de référence, avec chacune des mesures hybrides délivrées par les N premiers filtres d'hybridation,
  ○ en déduire l'identification de la mesure défaillante.

Selon un aspect particulier du premier mode de réalisation de l'invention, ledit module d'exclusion d'une défaillance d'un satellite est en outre configuré pour:

- Comparer la différence entre la mesure hybride de référence et chacune des mesures hybrides délivrées par les N premiers filtres d'hybridation à un seuil de détection prédéterminé,
- Conclure sur la présence d'une mesure défaillante parmi le groupe de N-1 mesures utilisées par les premiers filtres d'hybridation qui vérifient le test de comparaison précité,
- Identifier la mesure défaillante comme celle appartenant à l'intersection des groupes de N-1 mesures comprenant une mesure défaillante.

Selon un autre aspect particulier du premier mode de réalisation de l'invention, ledit module d'exclusion d'une défaillance d'un satellite est en outre configuré pour :

- appliquer un test statistique du type « RAIM » à un ensemble de mesures comprenant les mesures satellite réalisées sur les signaux reçus par tous les satellites en visibilité à l'exception d'un satellite, le test statistique étant dépendant de l'erreur entre chaque mesure dudit ensemble et une estimée de chacune de ces mesures,
- détecter la présence d'une mesure satellite défaillante parmi les mesures satellites dudit ensemble en fonction dudit test statistique,
- injecter, en entrée des M seconds filtres d'hybridation, en priorité les mesures satellites n'appartenant pas à un ensemble dans lequel la présence d'une mesure défaillante a été détectée.

Selon un autre aspect particulier du premier mode de réalisation de l'invention, la période de mise à jour d'un premier filtre d'hybridation est inférieure à la période de mise à jour d'un second filtre d'hybridation.

L'invention a également pour objet, dans un second mode de réalisation, un système d'exclusion d'une mesure satellite défaillante dans un système de positionnement par satellite, ledit système comprenant :

- une pluralité M de filtres d'hybridation recevant chacun au moins une mesure réalisée sur les signaux reçus par tous les satellites en visibilité dudit système et une mesure de positionnement inertielle et délivrant une mesure de positionnement corrigée, dite mesure hybride, lesdits filtres d'hybridation étant mis à jour, à un rythme temporel constant, successivement à des instants temporels décalés périodiquement,
- un module de détection apte à délivrer un instant de détection d'une défaillance d'au moins une mesure de positionnement satellite,
- un module d'exclusion d'une mesure de positionnement satellite défaillante configuré pour :

  ∘ sélectionner la mesure hybride, appelée mesure hybride de référence, la plus ancienne, par rapport à l'instant de détection d'une défaillance, parmi les M mesures hybrides à jour délivrées par les M filtres d'hybridation,
  ∘ appliquer un test statistique du type « RAIM » à un ensemble de mesures comprenant d'une part les mesures satellite réalisées sur les signaux reçus par tous les satellites en visibilité à l'exception d'un satellite et d'autre part la mesure hybride de référence, le test statistique étant dépendant de l'erreur entre chaque mesure dudit ensemble et une estimée de chacune de ces mesures,
  ∘ détecter la présence d'une mesure satellite défectueuse parmi les mesures satellites dudit ensemble en fonction dudit test statistique,
  ∘ itérer les deux étapes précédentes en modifiant à chaque itération la mesure satellite exclue dudit ensemble,
  ∘ en déduire l'identification de la mesure satellite défectueuse.

Selon un aspect particulier du second mode de réalisation de l'invention, ledit test statistique consiste au moins à:

- Former un système d'équations reliant d'une part les mesures satellites dudit ensemble aux coordonnées de la position du système et d'autre part la mesure hybride de référence aux coordonnées de la position du système
- Construire un vecteur des résidus par application de l'algorithme des moindres carrés audit système d'équations,
- Construire un résidu unique à partir dudit vecteur des résidus,
- Comparer le résidu unique à un seuil de détection prédéterminé.

Selon un aspect particulier du second mode de réalisation de l'invention, la mesure hybride de référence comporte une mesure de position du système et une mesure de biais d'horloge entre un satellite et ledit système.

Selon un aspect particulier du second mode de réalisation de l'invention, l'ensemble de mesures auquel le test statistique est appliqué comporte en outre le bruit de mesure impactant la mesure hybride de référence qui est fourni par le filtre d'hybridation ayant délivré ladite mesure hybride.

Selon un aspect particulier du second mode de réalisation de l'invention, ledit module d'exclusion d'une défaillance d'un satellite est en outre configuré pour :

- appliquer un test statistique du type « RAIM » à un ensemble de mesures comprenant les mesures satellite réalisées sur les signaux reçus par tous les satellites en visibilité à l'exception d'un satellite, le test statistique étant dépendant de l'erreur entre chaque mesure dudit ensemble et une estimée de chacune de ces mesures,
- détecter la présence d'une mesure satellite défectueuse parmi les mesures satellites dudit ensemble en fonction dudit test statistique,
- injecter, en entrée des M filtres d'hybridation, en priorité les mesures satellites n'appartenant pas à un ensemble dans lequel la présence d'une mesure défectueuse a été détectée.

Selon un aspect particulier de l'un quelconque des deux modes de réalisation de l'invention, la durée entre deux instants temporels successifs de mise à jour de deux seconds filtres d'hybridation distincts est sensiblement égale à la période de mise à jour d'un second filtre d'hybridation divisée par le nombre M de seconds filtres d'hybridation.

Selon un aspect particulier de l'un quelconque des deux modes de réalisation de l'invention, un filtre d'hybridation est un filtre de Kalman.

L'invention a également pour objet un système de navigation comprenant un récepteur de positionnement par satellite apte à délivrer des mesures de pseudo-distances ou de positionnement à partir de signaux émis par des satellites appartenant à une constellation d'un système de positionnement par satellite, une centrale inertielle apte à délivrer des mesures de positionnement inertielles et un système d'exclusion d'une mesure satellite défaillante dans un système de positionnement par satellite selon l'invention.

D'autres caractéristiques et avantages de la présente invention apparaîtront mieux à la lecture de la description qui suit en relation aux dessins annexés qui représentent :

- La figure 1, un système de navigation hybride selon l'art antérieur,
- La figure 2, un système de navigation hybride selon un premier mode de réalisation de l'invention,
- La figure 3, un système de navigation hybride selon un second mode de réalisation de l'invention,

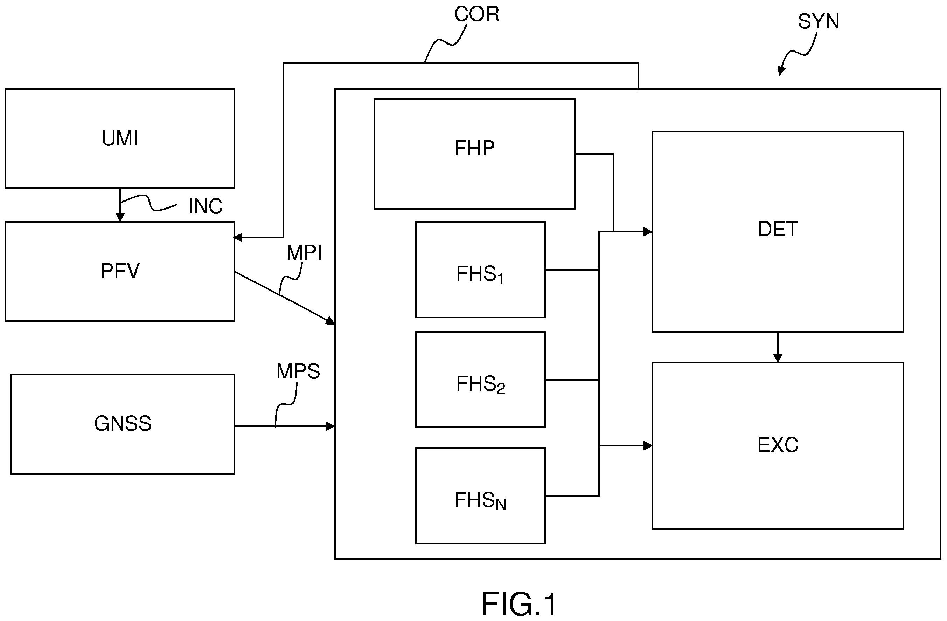

La figure 1 représente un système de navigation hybride selon l'art antérieur.

Ce système SYN comporte notamment:

- un récepteur de positionnement par satellites GNSS, recevant des signaux émis par N satellites d'une constellation GNSS en visibilité et délivrant des mesures de positionnement MPS, par exemple des mesures brutes de pseudo-distance,
- une unité de mesure inertielle UMI, comprenant par exemple au moins un gyromètre et un accéléromètre, délivrant des incréments d'angle et des incréments de vitesse INC,
- une plate-forme virtuelle PFV, recevant les incréments d'angle et de vitesse INC et produisant des mesures de positionnement inertielles MPI, par exemple des mesures de position et/ou de vitesse. Optionnellement, la plate-forme virtuelle PFV peut également recevoir des mesures d'altitude barométrique.

Le système SYN selon l'art antérieur comporte en outre un ensemble de filtres d'hybridation, par exemple implémentés sous la forme de filtres de Kalman, dont l'objectif est d'estimer les erreurs réalisées sur les mesures de position inertielles MPI, à partir des informations complémentaires fournies par les mesures de positionnement satellite MPS.

Le système SYN comporte à cet effet un filtre d'hybridation principal FHP et N filtres d'hybridation secondaires $FHS_1,...FHS_N$. Le nombre N de filtres d'hybridation secondaires est égal au nombre de satellites en visibilité. Le filtre d'hybridation principal FHP reçoit toutes les mesures de positionnement satellite MPS déterminées sur les N signaux émis par les N satellites et produit une mesure de positionnement corrigée à partir d'un vecteur d'état correspondant aux erreurs du système hybride obtenu en observant les écarts entre les mesures de position inertielles MPI et les mesures de positionnement satellite MPS. Le filtre d'hybridation principal FHP produit également une matrice de variance/covariance de l'erreur d'estimation.

Les filtres d'hybridation secondaires sont identiques au filtre d'hybridation principal à la différence prêt qu'ils reçoivent en entrée les mesures de positionnement satellite MPS correspondant à N-1 signaux parmi les N signaux disponibles. Pour chaque filtre d'hybridation secondaire, une mesure associée à un satellite différent est exclue du filtrage.

Le système SYN comporte encore un module de détection d'une panne d'un satellite DET ainsi qu'un module d'exclusion du satellite en panne EXC.

Plusieurs méthodes de détection de panne sont connues de l'état de l'art. Une première méthode consiste à comparer la sortie du filtre d'hybridation principal avec chaque sortie des filtres d'hybridation secondaires. La comparaison peut se faire en comparant l'écart entre les sorties deux à deux avec un seuil de détection calculé à partir des matrices de variance/covariance fournies par les filtres. Lorsqu'un seuil de détection est dépassé, cela signifie qu'une panne est présente sur l'un des satellites. Le seuil de détection est configuré pour obtenir une probabilité de fausse alarme donnée.

EP 2 998 765 B1

Une seconde méthode, décrite par exemple dans le document [1], consiste à contrôler les innovations de tous les filtres d'hybridation secondaires et à détecter une innovation incohérente vis-à-vis d'un modèle prédéfini.

Lorsqu'une panne est détectée par le module de détection DET, le module d'exclusion EXC est activé afin d'identifier le satellite défectueux.

La encore, plusieurs méthodes de l'art antérieur existent. La référence [1] décrit une première méthode connue sous l'acronyme anglo-saxon RAIM pour « Receiver Autonomous Integrity Monitoring ». Cette première méthode n'exploite que les mesures réalisées sur les signaux satellites sans utiliser de filtres d'hybridation. Elle nécessite au moins six satellites en visibilité. A partir de plusieurs (au moins 5) mesures de pseudo-distances ainsi que des mesures de bruit associées, il est possible de calculer un résidu d'erreur entre les mesures de pseudo-distances et les pseudo-distances estimées. Un résidu est calculé en retirant un satellite à chaque fois des mesures obtenues. Le résidu est comparé à un seuil de détection configuré à partir des bruits de mesures. Si un seul résidu ne dépasse pas le seuil de détection, on peut alors identifier quel est le satellite défectueux. Il s'agit du satellite qui n'a pas été exploité pour calculer le résidu qui ne dépasse pas le seuil de détection. Ce principe est connu de l'Homme du métier et est décrit dans de nombreux ouvrages, on peut citer également la référence [2], en particulier en page 43.

Une deuxième méthode d'exclusion connue est décrite dans la référence [1] pour le cas de filtres d'hybridation entre mesures GNSS et mesures inertielles. Elle est basée, comme la méthode de détection, sur le contrôle d'innovation des filtres d'hybridation secondaires.

Le système de l'art antérieur tel que décrit à la figure 1 présente notamment l'inconvénient d'être sensible à la géométrie de la constellation des satellites GNSS. En effet, dans certaines configurations, la détection et/ou l'exclusion, en cas de panne d'un satellite, ne sera pas correctement activée. Ce phénomène peut se produire notamment lorsqu'il y a peu de redondance sur un axe, autrement dit lorsque plusieurs satellites sont proches.

En outre, les méthodes d'exclusion précitées nécessitent au moins six satellites en visibilité pour pouvoir identifier le satellite défaillant.

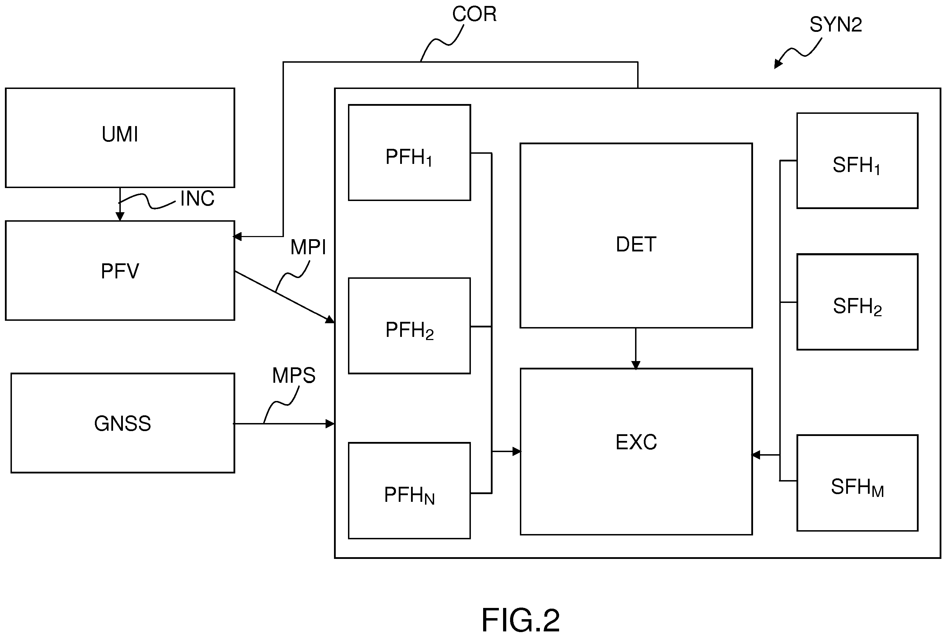

La figure 2 illustre un système de navigation hybride SYN2 selon un premier mode de réalisation de l'invention.

Le système SYN2 comprend les mêmes éléments que le système SYN selon l'art antérieur décrit à la figure 1. Il comporte notamment une pluralité de premiers filtres d'hybridation $PFH_1,PFH_2,...PFH_N$ en nombre N égal au nombre de satellites en visibilité. Les premiers filtres d'hybridation $PFH_1,PFH_2,...PFH_N$ reçoivent en entrée les mesures de positionnement satellite MPS correspondant à N-1 signaux parmi les N signaux disponibles. Pour chaque filtre d'hybridation secondaire, une mesure associée à un satellite différent est exclue du filtrage.

Le système SYN2 peut également comprendre, tout comme le système de l'art antérieur SYN, un filtre d'hybridation principal FHP qui peut être utilisé, par exemple, par le module de détection DET tel que décrit ci-dessus.

Le système SYN2 comprend en outre une pluralité de seconds filtres d'hybridation $SFH_1,SFH_2,...SFH_M$. Ces filtres secondaires ont une période de mise à jour, ou recalage, plus élevée que les premiers filtres d'hybridation $PFH_1,PFH_2,...PFH_N$. Typiquement les premiers filtres d'hybridation ont une période de mise à jour de l'ordre de quelques secondes tandis que les seconds filtres d'hybridation ont une période de mise à jour de l'ordre de quelques minutes. Le nombre M de seconds filtres d'hybridation est un paramètre de l'invention. Il dépend notamment de la classe inertielle, c'est-à-dire de la précision des mesures fournies par l'unité de mesure inertielle UMI. Si la précision est faible, une valeur élevée est choisie pour M.

Les seconds filtres d'hybridation $SFH_1,SFH_2,...SFH_M$ ont chacun un instant de recalage, ou mise à jour, décalé temporellement par rapport au filtre précédent. Par exemple, la période de mise à jour des filtres peut être égale à M minutes, le premier filtre $SFH_1$ est alors mis à jour à un instant $t_0$, le second filtre $SFH_2$ est mis à jour à un instant $t_0 +$ 1 minute, le dernier filtre $SFH_M$ est mis à jour à un instant $t_0 + (M-1)$ minutes. Les instants de mise à jour sont exprimés modulo M. Préférentiellement le décalage entre deux mises à jour successives de deux filtres distincts est choisi constant. Les seconds filtres d'hybridation $SFH_1,SFH_2,...SFH_M$ reçoivent toutes les mesures de positionnement satellite MPS déterminées sur les N signaux émis par les N satellites.

L'invention concerne une nouvelle méthode d'exclusion d'un satellite défaillant, cette méthode étant implémentée par le module d'exclusion EXC. La méthode de détection de panne est choisie parmi les méthodes de l'art antérieur décrites ci-dessus. Préférentiellement, la méthode de détection implémentée par le module de détection DET est paramétrée avec une probabilité de fausse alarme plus faible que celle imposée par les normes, de sorte à diminuer le temps de détection. Le module de détection DET est dans ce cas dupliqué par un second module de détection qui exécute le même algorithme mais avec un taux de fausse alarme plus élevé afin d'être compatible des normes et de fournir une alerte avec une fiabilité suffisante.

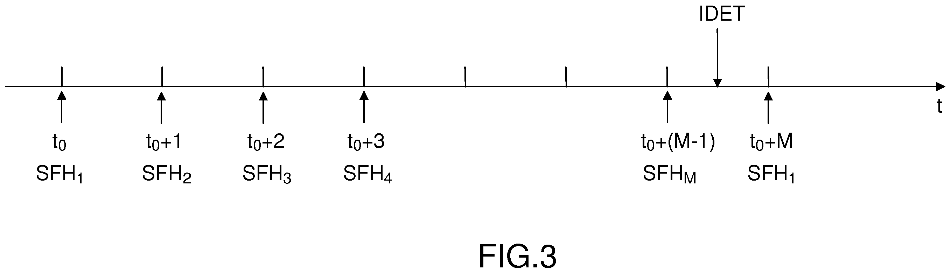

La méthode d'exclusion du satellite défaillant consiste ensuite, dans un premier temps, à sélectionner le filtre, parmi les M seconds filtres d'hybridation $SFH_1,SFH_2,...SFH_M$, dont la dernière mise à jour est la plus éloignée dans le temps de l'instant de détection de la panne. La figure 3 illustre sur un axe des temps t, les instants de mise à jour des différents filtres d'hybridation $SFH_1,SFH_2,...SFH_M$. Le premier filtre $SFH_1$ est mis à jour à $t_0$ puis à $t_0 + M$, le second filtre $SFH_2$ est mis à jour à $t_0 + 1$ puis à $t_0 + M+1$ et ainsi de suite. Sur la figure 3 est également représenté l'instant IDET de détection de la panne par le module de détection DET. En comparant cet instant IDET aux M instants de mise à jour

5

précédents des filtres d'hybridation, on sélectionne le filtre $SFH_1$ qui est celui dont l'instant de mise à jour est le plus éloigné dans le temps de l'instant de détection IDET. Le filtre d'hybridation $SFH_1$ retenu est celui dont la mise à jour est intervenue le plus longtemps possible avant la détection de la panne d'un satellite. La sortie de ce filtre correspond donc à la mesure la plus vraisemblablement correcte parmi les sorties des M filtres secondaires $SFH_1,SFH_2,...SFH_M$. L'idée à la base de l'invention consiste à utiliser cette mesure comme mesure de référence. On désigne par la suite le filtre d'hybridation secondaire retenu $SFH_1$ comme filtre d'hybridation de référence.

Dans un second temps, on compare la sortie du filtre d'hybridation $SFH_1$ de référence avec chacune des sorties des N premiers filtres d'hybridation $PFH_1,PFH_2,...PFH_N$ pour en déduire quel satellite est défectueux.

Lorsque la sortie d'un premier filtre d'hybridation présente un écart significatif avec la sortie du filtre d'hybridation de référence, cela signifie qu'une des mesures satellites utilisées en entrée du premier filtre d'hybridation est défectueuse. Par élimination, on identifie le satellite défectueux comme celui appartenant à l'intersection des groupes de satellites comprenant un satellite défectueux.

La comparaison entre les sorties de deux filtres d'hybridation peut se faire de plusieurs manières. Elle peut être réalisée sur une seule valeur ou sur un vecteur comprenant plusieurs valeurs. Elle peut être réalisée, par exemple, en calculant l'écart entre les deux sorties et en comparant cet écart à un seuil de détection préconfiguré.

Les différents filtres d'hybridation utilisés par le système selon l'invention sont conçus selon les connaissances générales dans le domaine des systèmes de navigation hybrides. Ils peuvent par exemple être réalisés par des filtres de Kalman.

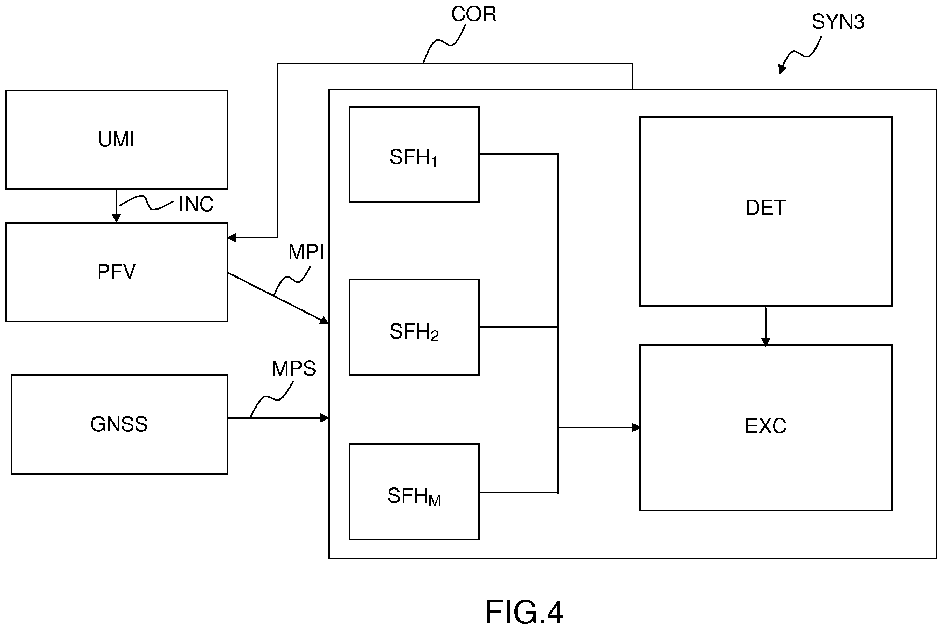

La figure 4 illustre un système de navigation hybride SYN3 selon un second mode de réalisation de l'invention.

Le système SYN3 comprend un récepteur de positionnement par satellites GNSS, recevant des signaux émis par N satellites d'une constellation GNSS en visibilité et délivrant des mesures de positionnement MPS, par exemple des mesures brutes de pseudo-distance, une unité de mesure inertielle UMI et une plate-forme virtuelle PFV.

Le système SYN3 comprend également un module de détection de panne DET et un module d'exclusion de panne EXC. La méthode de détection de panne est choisie parmi les méthodes de l'art antérieur décrites ci-dessus. Préférentiellement, la méthode de détection implémentée par le module de détection DET est paramétrée avec une probabilité de fausse alarme plus faible que celle imposée par les normes, de sorte à diminuer le temps de détection.

Le système SYN3 comprend en outre une pluralité de filtres d'hybridation $SFH_1,SFH_2,...SFH_M$ identiques aux M seconds filtres d'hybridations décrits à la figure 2 pour le cas du 1er mode de réalisation de l'invention.

L'utilisation de filtres d'hybridation $SFH_1,SFH_2,...SFH_M$ ayant un instant de mise à jour décalé temporellement les uns par rapport aux autres est un élément inventif commun aux deux modes de réalisation de l'invention respectivement décrits aux figures 2 et 4. Dans les deux modes, on sélectionne un filtre d'hybridation de référence dont la dernière mise à jour est la plus éloignée dans le temps de l'instant de détection de la panne comme cela a été décrit dans le cas du premier mode de réalisation.

Dans le second mode de réalisation de l'invention décrit à la figure 4, la sortie du filtre d'hybridation de référence est utilisée pour compléter les mesures de pseudo-distances obtenues sur les signaux émis par les satellites en visibilité appartenant à la constellation GNSS.

Pour cela, on se base sur la méthode de l'art antérieur connue sous l'acronyme RAIM « Receiver Autonomous Integrity Monitoring » telle que décrite, par exemple aux pages 39 à 43 de la référence [2].

Le principe général de la méthode RAIM consiste à résoudre un système d'équations obtenues par application du principe de triangulation. La pseudo-distance mesurée sur un signal satellite est reliée, par l'intermédiaire d'une équation, aux coordonnées du dispositif récepteur et aux coordonnées du satellite. Ces dernières étant connues (par exemple par le biais d'éphémérides), l'équation précitée comporte alors quatres inconnues qui correspondent aux trois coordonnées spatiales du récepteur et à une quatrième inconnue correspondant à l'incertitude temporelle liée à la désynchronisation entre l'horloge du satellite et l'horloge du récepteur.

En utilisant au moins quatre mesures de pseudo-distances associées à quatre satellites distincts, on peut résoudre le système d'équations à quatre inconnues et en déduire la position du récepteur selon un principe bien connu.

La méthode RAIM exploite ce principe en introduisant, dans le système d'équations précité, un paramètre supplémentaire de bruit qui affecte la mesure. Ce paramètre est fourni par le récepteur.

Le système d'équations à résoudre peut être formulé de la façon suivante :

$$Z_t = h_t(X_t) + \varepsilon_t \qquad (1)$$

$Z_t$ est un vecteur comprenant N mesures de pseudo-distances associées aux N signaux reçus des N satellites en visibilité de la constellation.

$X_t$ est un vecteur d'état composé du quadruplet $(x_t,y_t,z_t,b_{H,t})$ où $(X_t,Y_t,Z_t)$ sont les coordonnées du récepteur et $b_{H,t}$ est le biais de l'horloge du récepteur, par rapport à l'horloge commune des satellites, à l'instant t.

$h_t$ est une fonction non linéaire liant les paramètres du vecteur d'état à estimer aux mesures observées.

$\varepsilon_t$ est un vecteur contenant les N bruits de mesure affectant les pseudo-distances mesurées. Ces bruits sont fournis par le récepteur.

L'algorithme des moindres carrés peut être appliqué pour résoudre le système d'équations (1). En effet, cet algorithme permet d'estimer des paramètres inconnus à partir d'observations bruitées. Ces observations doivent dépendre linéairement des paramètres à estimer. Pour cela, il faut au préalable linéariser le système d'équations (1) par un développement au premier ordre. La linéarisation se fait autour du point précédemment estimé, noté $\hat{X}_{t\text{-}1}$.

La linéarisation au premier ordre du système (1) s'écrit alors :

$$Z_t = h_t\big(\hat{X}_{t-1}\big) + H_t(X_t - \hat{X}_{t-1}) + \varepsilon_t \qquad (2)$$

$H_t$ est une matrice de dimension Nx4 qui contient les dérivées partielles de $h_t$ par rapport aux composantes de $X_t$ et évaluées en $\hat{X}_{t\text{-}1}$. Cette matrice dépend de la position relative des satellites par rapport au récepteur.

L'équation (2) peut être reformulée de la façon suivante :

$$Y_t = H_t \delta X_t + \varepsilon_t \qquad (3)$$

$Y_t = Z_t - h_t(\hat{X}_{t\text{-}1})$ est le vecteur de mesure de l'équation GNSS linéarisée.

$\delta X_t = X_t - \hat{X}_{t\text{-}1}$ est l'écart entre le vecteur d'état à l'instant t,

$X_t$ et le vecteur d'état estimé à l'instant précédent t-1.

En appliquant l'algorithme des moindres carrés à l'équation (3), la méthode RAIM consiste à construire un vecteur de résidus, un résidu étant égal à la différence entre une mesure effectivement observée et une mesure estimée à partir de la solution des moindres carrés.

En reprenant les notations précédentes, le vecteur des résidus des moindres carrés, noté $\Delta Y_t$, s'exprime comme la différence entre les mesures effectivement reçues et les mesures estimées à partir de la solution des moindres carrés.

$$\Delta Y_t = Y_t - H_t \widehat{\delta X}_t \qquad (4)$$

En comparant la somme du carré des résidus à un seuil de détection préconfiguré, il est possible de détecter une défaillance d'un satellite. Le seuil de détection est déterminé pour une probabilité de fausse alarme donnée et dépend du nombre de mesures N.

En appliquant ce principe à N estimateurs utilisant chacun N-1 mesures satellites et excluant chacun une mesure différente, on peut identifier la mesure satellitaire défaillante. En effet, si un seul estimateur ne dépasse pas le seuil de détection de défaillance, cela signifie que les N-1 mesures utilisées pour construire cet estimateur sont saines et que le satellite défaillant est à l'intersection des N-1 autres groupes pour lesquels l'estimateur dépasse le seuil de détection.

Selon le second mode de réalisation de l'invention, la méthode RAIM précitée est améliorée en ajoutant, au système d'équations à résoudre, plusieurs équations supplémentaires reliant la pseudo-distance entre le récepteur et un satellite aux mesures de position et d'erreur d'horloge fournies en sortie du filtre d'hybridation de référence. L'information de bruit associée à ces mesures est fournie par la matrice de variance/covariance de sortie du filtre.

Le filtre d'hybridation de référence fourni un vecteur d'erreur composé des erreurs de position et de biais d'horloge $\Delta X_{hyb} = (\Delta x\ \Delta y\ \Delta z\ \Delta b)^T$. Ce vecteur peut comprendre uniquement les mesures d'erreurs de position ou, en complément, une mesure d'erreur sur le biais d'horloge.

Ce vecteur de mesures peut être intégré au système d'équations (3) comme mesures supplémentaires de l'erreur $\delta X_t = X_t - \hat{X}_{t\text{-}1}$. Dans ce cas le système d'équations (3) est augmenté de $N_{hyb}$ équations supplémentaires où $N_{hyb}$ est égal au nombre de mesures du vecteur $\Delta X_{hyb}$ en sortie du filtre d'hybridation de référence.

La matrice $H_t$ est également modifiée, elle devient $H_t = \begin{bmatrix} H_t \\ H_{hyb} \end{bmatrix}$, avec $H_{hyb}$ la matrice identité de taille $N_{hyb}$.

Le système d'équations (3) peut être réécrit de la façon suivante :

$$Y_t = Z_t - h_t(\hat{X}_{t-1}) = \begin{bmatrix} PR1 - ht1(\hat{X}_{t-1}) \\ PR2 - ht2(\hat{X}_{t-1}) \\ ... \\ PRN - htN(\hat{X}_{t-1}) \\ \Delta x - 0 \\ \Delta y - 0 \\ \Delta z - 0 \\ \Delta b - 0 \end{bmatrix} = \begin{bmatrix} \Delta PR1 \\ \Delta PR2 \\ ... \\ \Delta PRN \\ \Delta x \\ \Delta y \\ \Delta z \\ \Delta b \end{bmatrix} = \begin{bmatrix} H_t \\ H_{hyb} \end{bmatrix} \delta X_t + \varepsilon_t ] \qquad (5)$$

PR1,PR2,...PRN sont les mesures de pseudo-distances réalisées sur les N signaux satellites reçus.

L'ajout des mesures supplémentaires $\Delta x$ $\Delta y$ $\Delta z$ $\Delta b$ donne une information sur tous les axes (grâce aux trois coordonnées du récepteur) et suivant la direction du biais d'horloge et permet ainsi de compenser une mauvaise configuration géométrique des satellites.

En outre, l'ajout de trois ou quatre mesures supplémentaires au système d'équations à résoudre permet de diminuer d'autant le nombre de satellites en visibilité nécessaire pour résoudre le système.

On décrit à présent une variante de réalisation du premier ou du second mode de réalisation de l'invention, permettant d'améliorer la fiabilité des mesures fournies par le filtre d'hybridation de référence.

Parallèlement ou antérieurement à la mise en oeuvre d'une méthode d'exclusion d'un défaut satellite selon le premier ou le second mode de réalisation de l'invention, il est possible d'appliquer un algorithme d'exclusion du type RAIM qui présente l'avantage de pouvoir valider au fur et à mesure du traitement les mesures satellites qui semblent saines.

Précisément, selon la méthode RAIM, si le résidu calculé pour un groupe de N-1 mesures satellites dépasse le seuil de détection, cela signifie qu'une des N-1 mesures est défectueuse et à l'inverse que la N$^{ième}$ mesure non exploitée dans ce groupe peut être considérée comme saine.

Ainsi, la mesure non utilisée par un groupe de N-1 mesures dont le résidu dépasse le seuil de détection de défaut peut être utilisée prioritairement par les filtres d'hybridation parmi lesquels le filtre d'hybridation de référence est sélectionné.

Un avantage de cette variante est qu'elle permet d'améliorer encore la précision des mesures délivrées par le filtre d'hybridation de référence puisqu'il utilise en priorité des mesures satellites qui sont vraisemblablement saines car identifiées comme telles par la méthode RAIM. Ainsi l'incertitude associée à ces mesures est diminuée.

Un autre avantage de cette variante de réalisation de l'invention concerne le calcul du rayon de protection HEL de l'anglais « Horizontal Exclusion Limit ». Ce rayon de protection définit une borne d'erreur de positionnement que le système ne peut dépasser sans parvenir à corriger la défaillance de positionnement avec une probabilité de non détection et de fausse alarme donnée.

Ce rayon garantit que la panne sera exclue avant que l'avion ne sorte du cercle de protection défini par ce rayon.

Le rayon de protection HEL est une grandeur couramment utilisée dans le domaine des systèmes de navigation aéronautiques.

Son calcul précis dans le cas d'une méthode d'exclusion de panne de type RAIM est par exemple décrit en pages 44 à 46 de la référence [2].

Ce calcul est basé sur la somme des résidus au carré fournis par la résolution au sens des moindres carrés du système d'équation (2) modifié avec les mesures supplémentaires fournies par le filtre d'hybridation de référence. La somme des résidus au carré, en présence d'une panne, constitue une loi statistique du chi2 à N-5 degrés de liberté non centrée où N est le nombre d'équations du système (2). Le plus petit paramètre de non centralité détectable de cette loi du chi2 est calculable à partir d'une probabilité de fausse alarme et d'une probabilité de non détection.

Il se calcule sur la base de l'hypothèse que la probabilité (suivant la loi du chi2 non centrée) que la somme des résidus au carré ne dépasse pas le seuil de détection alors que la panne est présente est inférieure à la probabilité de non détection.

Le plus petit paramètre de non centralité permet de remonter au plus petit biais satellite détectable à partir des équations de projection. Le plus petit biais détectable permet de remonter à l'erreur provoquée par le plus petit biais détectable. Pour chaque sous groupe k comprenant N-1 satellites, on calcule l'impact sur l'erreur de position du plus petit biais détectable, on obtient alors N-1 rayons de protection RPi (i variant de 1 à N-1), on prend alors le maximum d'entre eux noté HILk. Le maximum parmi tous les rayons HILk en faisant varier k de 1 à N donne le rayon de protection HEL recherché.

Le rayon de protection HEL peut être calculé avant la mission de façon prédictive car il ne dépend que des bruits, des probabilités et de la géométrie des mesures.

L'avantage du second mode de réalisation de l'invention est qu'il permet d'appliquer un calcul de rayon de protection HEL identique à celui de la méthode RAIM mais avec de meilleures performances, autrement dit une précision accrue.

**EP 2 998 765 B1**

*Références*

[1] « Fault Detection and exclusion using normalized solution separation and residual monitoring methods », Ryan S.Y.Young, Gary A. McGraw,
[2] " Algorithmes de contrôle d'intégrité pour la navigation hybride GNSS et systems de navigation inertielle en presence de multiples mesures satellitaires défaillantes", Frédéric Faurie, thèse de l'université de Bordeaux,

**Revendications**

1. Système d'exclusion d'une mesure satellite défaillante dans un système de positionnement par satellite, ledit système comprenant :

   • Une pluralité N de premiers filtres d'hybridation ($PFH_1$,..$PFH_N$) recevant chacun au moins une mesure de positionnement satellite (MPS) réalisée sur les signaux reçus par tous les satellites en visibilité dudit système à l'exception d'un satellite, différent pour chaque premier filtre d'hybridation différent, et une mesure de positionnement inertielle (MPI) et délivrant une mesure de positionnement corrigée, dite mesure hybride ($MH_{P1}$,.. $MH_{PN}$),
   • un module de détection (DET) apte à délivrer un instant de détection d'une défaillance d'au moins une mesure de positionnement satellite (MPS),
   • un module d'exclusion (EXC) d'une mesure de positionnement satellite défaillante,

   ledit système étant **caractérisé en ce que** :

   • il comprend une pluralité M de seconds filtres d'hybridation ($SFH_1$,..$SFH_M$) recevant chacun au moins une mesure de positionnement satellite (MPS) réalisée sur les signaux reçus par tous les satellites en visibilité dudit système et une mesure de positionnement inertielle (MPI) et délivrant une mesure de positionnement corrigée, dite mesure hybride ($MH_{S1}$,.. $MH_{SM}$), les seconds filtres d'hybridation étant mis à jour, à un rythme temporel constant, successivement à des instants temporels décalés périodiquement,
   • le module d'exclusion (EXC) est configuré pour :

      ∘ sélectionner la mesure hybride la plus ancienne, par rapport à l'instant de détection d'une défaillance, parmi les M mesures hybrides ($MH_{S1}$,.. $MH_{SM}$) à jour délivrées par les M seconds filtres d'hybridation,
      ∘ comparer la mesure hybride sélectionnée, dite mesure hybride de référence ($MH_{REF}$), avec chacune des mesures hybrides ($MH_{P1}$,.. $MH_{PN}$) délivrées par les N premiers filtres d'hybridation,
      ∘ en déduire l'identification de la mesure défaillante.

2. Système d'exclusion d'une mesure satellite défaillante selon la revendication 1 dans lequel ledit module d'exclusion (EXC) d'une défaillance d'un satellite est en outre configuré pour :

   • Comparer la différence entre la mesure hybride de référence ($MH_{REF}$) et chacune des mesures hybrides ($MH_{P1}$,.. $MH_{PN}$) délivrées par les N premiers filtres d'hybridation à un seuil de détection prédéterminé,
   • Conclure sur la présence d'une mesure défaillante parmi le groupe de N-1 mesures (MPS) utilisées par les premiers filtres d'hybridation qui vérifient le test de comparaison précité,
   • Identifier la mesure défaillante comme celle appartenant à l'intersection des groupes de N-1 mesures (MPS) comprenant une mesure défaillante.

3. Système d'exclusion d'une mesure satellite défaillante selon l'une des revendications 1 ou 2 dans lequel ledit module d'exclusion (EXC) d'une défaillance d'un satellite est en outre configuré pour :

   • appliquer un test statistique du type « RAIM » à un ensemble de mesures comprenant les mesures satellite (MPS) réalisées sur les signaux reçus par tous les satellites en visibilité à l'exception d'un satellite, le test statistique étant dépendant de l'erreur entre chaque mesure dudit ensemble et une estimée de chacune de ces mesures,
   • détecter la présence d'une mesure satellite défaillante parmi les mesures satellites (MPS) dudit ensemble en fonction dudit test statistique,

9

• injecter, en entrée des M seconds filtres d'hybridation (SFH$_1$,..SFH$_M$), en priorité les mesures satellites (MPS) n'appartenant pas à un ensemble dans lequel la présence d'une mesure défaillante a été détectée.

4. Système d'exclusion d'une mesure satellite défaillante selon l'une des revendications précédentes dans lequel la période de mise à jour d'un premier filtre d'hybridation est inférieure à la période de mise à jour d'un second filtre d'hybridation.

5. Système d'exclusion d'une mesure satellite défaillante dans un système de positionnement par satellite, ledit système comprenant :

• une pluralité M de filtres d'hybridation (SFH$_1$,..SFH$_M$) recevant chacun au moins une mesure (MPS) réalisée sur les signaux reçus par tous les satellites en visibilité dudit système et une mesure de positionnement inertielle (MPI) et délivrant une mesure de positionnement corrigée, dite mesure hybride (MH$_{S1}$,.. MH$_{SM}$), lesdits filtres d'hybridation étant mis à jour, à un rythme temporel constant, successivement à des instants temporels décalés périodiquement,
• un module de détection (DET) apte à délivrer un instant de détection d'une défaillance d'au moins une mesure de positionnement satellite (MPS),
• un module d'exclusion (EXC) d'une mesure de positionnement satellite défaillante, ledit système étant **caractérisé en ce que** le module d'exclusion (EXC) est configuré pour :

◦ sélectionner la mesure hybride, appelée mesure hybride de référence, la plus ancienne, par rapport à l'instant de détection d'une défaillance, parmi les M mesures hybrides (MH$_{S1}$,.. MH$_{SM}$) à jour délivrées par les M filtres d'hybridation,
◦ appliquer un test statistique du type « RAIM » à un ensemble de mesures comprenant d'une part les mesures satellite (MPS) réalisées sur les signaux reçus par tous les satellites en visibilité à l'exception d'un satellite et d'autre part la mesure hybride de référence, le test statistique étant dépendant de l'erreur entre chaque mesure dudit ensemble et une estimée de chacune de ces mesures,
◦ détecter la présence d'une mesure satellite défectueuse parmi les mesures satellites (MPS) dudit ensemble en fonction dudit test statistique,
◦ itérer les deux étapes précédentes en modifiant à chaque itération la mesure satellite (MPS) exclue dudit ensemble,
◦ en déduire l'identification de la mesure satellite défectueuse.

6. Système d'exclusion d'une mesure satellite défaillante selon la revendication 5 dans lequel ledit test statistique consiste au moins à:

• Former un système d'équations reliant d'une part les mesures satellites (MPS) dudit ensemble aux coordonnées de la position du système et d'autre part la mesure hybride de référence aux coordonnées de la position du système
• Construire un vecteur des résidus par application de l'algorithme des moindres carrés audit système d'équations,
• Construire un résidu unique à partir dudit vecteur des résidus,
• Comparer le résidu unique à un seuil de détection prédéterminé.

7. Système d'exclusion d'une mesure satellite défaillante selon l'une des revendications 5 à 6 dans lequel la mesure hybride de référence comporte une mesure de position du système et une mesure de biais d'horloge entre un satellite et ledit système.

8. Système d'exclusion d'une mesure satellite défaillante selon l'une des revendications 5 à 7 dans lequel l'ensemble de mesures auquel le test statistique est appliqué comporte en outre le bruit de mesure impactant la mesure hybride de référence qui est fourni par le filtre d'hybridation ayant délivré ladite mesure hybride.

9. Système d'exclusion d'une mesure satellite défaillante selon l'une des revendications 5 à 8 dans lequel ledit module d'exclusion (EXC) d'une défaillance d'un satellite est en outre configuré pour :

• appliquer un test statistique du type « RAIM » à un ensemble de mesures comprenant les mesures satellite (MPS) réalisées sur les signaux reçus par tous les satellites en visibilité à l'exception d'un satellite, le test statistique étant dépendant de l'erreur entre chaque mesure dudit ensemble et une estimée de chacune de ces mesures,

• détecter la présence d'une mesure satellite défectueuse parmi les mesures satellites (MPS) dudit ensemble en fonction dudit test statistique,

• injecter, en entrée des M filtres d'hybridation (SFH$_1$,...SFH$_M$), en priorité les mesures satellites (MPS) n'appartenant pas à un ensemble dans lequel la présence d'une mesure défectueuse a été détectée.

10. Système d'exclusion d'une mesure satellite défaillante selon l'une des revendications précédentes dans lequel la durée entre deux instants temporels successifs de mise à jour de deux seconds filtres d'hybridation distincts est sensiblement égale à la période de mise à jour d'un second filtre d'hybridation divisée par le nombre M de seconds filtres d'hybridation.

11. Système d'exclusion d'une mesure satellite défaillante selon l'une des revendications précédentes dans lequel un filtre d'hybridation est un filtre de Kalman.

12. Système de navigation (SYN2, SYN3) comprenant un récepteur de positionnement par satellite (GNSS) apte à délivrer des mesures de pseudo-distances ou de positionnement (MPS) à partir de signaux émis par des satellites appartenant à une constellation d'un système de positionnement par satellite, une centrale inertielle (UMI,PFV) apte à délivrer des mesures de positionnement inertielles (MPI) et un système d'exclusion d'une mesure satellite défaillante dans un système de positionnement par satellite selon l'une des revendications précédentes.

## Patentansprüche

1. System zum Ausschließen einer fehlerhaften Satellitenmessung in einem Satellitenpositionierungsssystem, wobei das System Folgendes umfasst:

• eine Mehrzahl N von ersten Hybridisierungsfiltern (PFH$_1$,...PFH$_N$), die jeweils wenigstens eine Satellitenpositionierungsmessung (MPS), durchgeführt an den Signalen, die von allen Satelliten im Sichtbereich des Systems empfangen werden, mit Ausnahme von einem Satelliten, der sich für jedes erste unterschiedliche Hybridisierungsfilter unterscheidet, und eine Trägheitspositionierungsmessung (MPI) empfangen und eine korrigierte Positionierungssmessung, Hybrid-Messung (MH$_{P1}$,..MH$_{PN}$) genannt, liefern;

• ein Erkennungsmodul (DET), das eine Instanz einer Erkennung eines Fehlers von wenigstens einer Satellitenpositionierungsmessung (MPS) liefern kann;

• ein Modul (EXC) zum Ausschließen einer fehlerhaften Satellitenpositionierungsmessung,

wobei das System **dadurch gekennzeichnet ist, dass**:

• es eine Mehrzahl M von zweiten Hybridisierungsfiltern (SFH$_1$,...SFH$_M$) umfasst, die jeweils wenigstens eine Satellitenpositionierungsmessung (MPS), durchgeführt an den Signalen, die von allen Satelliten im Sichtbereich des Systems empfangen werden, und eine Trägheitspositionierungsmessung (MPI) empfangen und eine korrigierte Positionierungsmessung, Hybrid-Messung (MH$_{S1}$,..MH$_{SM}$) genannt, liefern, wobei die zweiten Hybridisierungsfilter in einem konstanten zeitlichen Rhythmus nacheinander zu periodisch verschobenen zeitlichen Instanzen aktualisiert werden;

• wobei das Ausschlussmodul (EXC) konfiguriert ist zum:

◦ Auswählen der ältesten Hybridmessung relativ zum Erkennungszeitpunkt eines Fehlers unter den M aktuellen Hybridmessungen (MH$_{S1}$,..MH$_{SM}$), die von den M zweiten Hybridisierungsfiltern geliefert werden;

◦ Vergleichen der gewählten Hybridmessung, Referenzhybridmessung (MH$_{REF}$) genannt, mit jeder der von den N ersten Hybridisierungsfiltern gelieferten Hybridmessungen (MH$_{P1}$,..MH$_{PN}$);

◦ Ableiten der Identifikation der fehlerhaften Messung davon.

2. System zum Ausschließen einer fehlerhaften Satellitenmessung nach Anspruch 1, wobei das Modul (TXC) zum Ausschließen eines Fehlers in einem Satelliten ferner konfiguriert ist zum:

• Vergleichen der Differenz zwischen der Referenzhybridmessung (MH$_{REF}$) und jeder der von den N ersten Hybridisierungsfiltern gelieferten Hybridmessungen (MH$_{P1}$,..MH$_{PN}$) mit einer vorbestimmten Erkennungsschwelle;

• Feststellen der Anwesenheit einer fehlerhaften Messung aus der Gruppe von N-1 Messungen (MPS), die von den ersten Hybridisierungsfiltern benutzt werden, und die den oben erwähnten Vergleichstest überprüfen;
• Identifizieren der fehlerhaften Messung als die, die zum Schnittpunkt der Gruppen von N-1 Messungen (MPS) gehören, die eine fehlerhafte Messung umfassen.

3. System zum Ausschließen einer fehlerhaften Satellitenmessung nach Anspruch 1 oder 2, wobei das Modul (EXC) zum Ausschließen eines Fehlers in einem Satelliten ferner konfiguriert ist zum:

• Anwenden eines statistischen Tests des "RAIM"-Typs auf einen Satz von Messungen, die die Satellitenmessungen (MPS) umfassen, die an den von allen Satelliten im Sichtbereich empfangenen Signale durchgeführt werden, mit Ausnahme von einem Satelliten, wobei der statistische Test von dem Fehler zwischen jeder Messung des Satzes und einer Schätzung von jeder dieser Messungen abhängig ist;
• Erkennen der Anwesenheit einer fehlerhaften Satellitenmessung aus den Satellitenmessungen (MPS) des Satzes je nach dem statistischen Test;
• Injizieren, am Eingang der M zweiten Hybridisierungsfilter ($SFH_1$,..$SFH_M$), vorrangig der Satellitenmessungen (MPS), die nicht zu einem Satz gehören, in dem die Anwesenheit einer fehlerhaften Messung erkannt wurde.

4. System zum Ausschließen einer fehlerhaften Satellitenmessung nach einem der vorherigen Ansprüche, wobei die Periode des Aktualisierens eines ersten Hybridisierungsfilters kürzer ist als die Periode des Aktualisierens eines zweiten Hybridisierungsfilters.

5. System zum Ausschließen einer fehlerhaften Satellitenmessung in einem Satellitenpositionierungssystem, wobei das System Folgendes umfasst:

• eine Mehrzahl M von Hybridisierungsfiltern ($SFH_1$,..$SFH_M$), die jeweils wenigstens eine Messung (MPS), die an den Signalen durchgeführt wird, die von allen Satelliten innerhalb des Sichtbereichs des Systems empfangen werden, und eine Trägheitspositionierungsmessung (MPI) empfangen und eine korrigierte Positionierungsmessung, Hybridmessung ($MH_{S1}$,..$MH_{SM}$) genannt, liefern, wobei die Hybridisierungsfilter in einem konstanten zeitlichen Rhythmus nacheinander in periodisch verschobenen zeitlichen Instanzen aktualisiert werden;
• ein Erkennungsmodul (DET), das eine Instanz einer Erkennung eines Fehlers bei wenigstens einer Satellitenpositionierungsmessung (MPS) liefern kann;
• ein Modul (EXC) zum Ausschließen einer fehlerhaften Satellitenpositionierungsmessung, wobei das System **dadurch gekennzeichnet ist, dass** das Ausschlussmodul (EXC) konfiguriert ist zum:

◦ Auswählen der ältesten Hybridmessung, Referenzhybridmessung genannt, relativ zur Instanz der Erkennung eines Fehlers, aus den von den M Hybridisierungsfeldern gelieferten aktuellen M Hybridmessungen ($MH_{S1}$,..$MH_{SM}$);
◦ Anwenden eines statistischen Tests des "RAIM"-Typs auf einen Satz von Messungen, die einerseits die Satellitenmessungen (MPS), die an den Signalen durchgeführt werden, die von allen Satelliten im Sichtbereich empfangen werden, mit Ausnahme eines Satelliten, und andererseits die Referenzhybridmessung umfassen, wobei der statistische Test von dem Fehler zwischen jeder Messung des Satzes und einer Schätzung jeder dieser Messungen abhängig ist;
◦ Erkennen der Anwesenheit einer fehlerhaften Satellitenmessung unter den Satellitenmessungen (MPS) des Satzes je nach dem statistischen Test;
◦ Wiederholen der zwei vorherigen Schritte, dabei Modifizieren der aus dem Satz ausgeschlossenen Satellitenmessung (MPS) bei jeder Iteration;
◦ Ableiten der Identifikation der fehlerhaften Satellitenmessung davon.

6. System zum Ausschließen einer fehlerhaften Satellitenmessung nach Anspruch 5, wobei der statistische Test wenigstens Folgendes umfasst:

• Bilden eines Systems von Gleichungen, die einerseits die Satellitenmessungen (MPS) des Satzes mit den Koordinaten der Position des Systems und andererseits die Referenzhybridmessung mit den Koordinaten der Position des Systems verbinden;
• Konstruieren eines Vektors von Resten durch Anwenden des Kleinste-Quadrate-Algorithmus auf das Gleichungssystem;
• Konstruieren eines eindeutigen Rests auf der Basis des Vektors von Resten;
• Vergleichen des eindeutigen Rests mit einer vorbestimmten Erkennungsschwelle.

7. System zum Ausschließen einer fehlerhaften Satellitenmessung nach einem der Ansprüche 5 bis 6, wobei die Referenzhybridmessung eine Positionsmessung des Systems und eine Zeitversatzmessung zwischen einem Satelliten und dem System umfasst.

8. System zum Ausschließen einer fehlerhaften Satellitenmessung nach einem der Ansprüche 5 bis 7, wobei der Satz von Messungen, auf die der statistische Test angewendet wird, ferner Messrauschen umfasst, das die Referenzhybridmessung beeinflusst, die von dem Hybridisierungsfilter geliefert wird, das die Hybridmessung geliefert hat.

9. System zum Ausschließen einer fehlerhaften Satellitenmessung nach einem der Ansprüche 5 bis 8, wobei das Modul (EXC) zum Ausschließen eines Fehlers in einem Satelliten ferner konfiguriert ist zum:

  • Anwenden eines statistischen Tests des "RAIM"-Typs auf einen Satz von Messungen, die die Satellitenmessungen (MPS) umfassen, die an den von allen Satelliten im Sichtbereich empfangenen Signalen durchgeführt werden, mit Ausnahme von einem Satelliten, wobei der statistische Test von dem Fehler zwischen jeder Messung des Satzes und einer Schätzung von jeder dieser Messungen abhängig ist;
  • Erkennen der Anwesenheit einer fehlerhaften Satellitenmessung aus den Satellitenmessungen (MPS) des Satzes je nach dem statistischen Test;
  • Injizieren, am Eingang der M Hybridisierungsfilter ($SFH_1,...SFH_M$), vorrangig der Satellitenmessungen (MPS), die nicht zu einem Satz gehören, in dem die Anwesenheit einer fehlerhaften Messung erkannt wurde.

10. System zum Ausschließen einer fehlerhaften Satellitenmessung nach einem der vorherigen Ansprüche, wobei die Dauer zwischen zwei aufeinanderfolgenden zeitlichen Instanzen des Aktualisierens von zwei zweiten separaten Hybridisierungsfiltern im Wesentlichen gleich der Periode des Aktualisierens eines zweiten Hybridisierungsfilters dividiert durch die Anzahl M von zweiten Hybridisierungsfiltern ist.

11. System zum Ausschließen einer fehlerhaften Satellitenmessung nach einem der vorherigen Ansprüche, wobei ein Hybridisierungsfilter ein Kaiman-Filter ist.

12. Navigationssystem (SYN2, SYN3), das Folgendes umfasst: einen Satellitenpositionierungsempfänger (GNSS), der Pseudodistanz- oder Positionierungsmessungen (MPS) auf der Basis von Signalen liefern kann, die von Satelliten gesendet werden, die zu einer Konstellation eines Satellitenpositionierungssystems gehören, eine Trägheitseinheit (UMI, PFV), die Trägheitspositionierungsmessungen (MPI) liefern kann, und ein System zum Ausschließen einer fehlerhaften Satellitenmessung in einem Satellitenpositionierungssystem nach einem der vorherigen Ansprüche.

**Claims**

1. A system for excluding a faulty satellite measurement in a satellite positioning system, said system comprising:

  • a plurality N of first hybridisation filters ($PFH_1,...PFH_N$) each receiving at least one satellite positioning measurement (MPS) carried out on the signals received by all of the satellites within the visibility of said system, with the exception of one satellite, which is different for each first different hybridisation filter, and one inertial positioning measurement (MPI), and delivering a corrected positioning measurement, called hybrid measurement ($MH_{P1},..MH_{PN}$);
  • a detection module (DET) able to deliver a detection instant of a fault of at least one satellite positioning measurement (MPS);
  • a module (EXC) for excluding a faulty satellite positioning measurement, said system being **characterised in that**:
  • it comprises a plurality M of second hybridisation filters ($SFH_1,...SFH_M$) each receiving at least one satellite positioning measurement (MPS) carried out on the signals received by all of the satellites within the visibility of said system and one inertial positioning measurement (MPI), and delivering a corrected positioning measurement, called hybrid measurement ($MH_{S1},..MH_{SM}$), the second hybridisation filters being updated, at a constant temporal rhythm, successively at periodically shifted temporal instants;
  • the exclusion module (EXC) is configured to:

    ◦ select the oldest hybrid measurement, relative to the detection instant of a fault, among the M up-to-date hybrid measurements ($MH_{S1},..MH_{SM}$) delivered by the M second hybridisation filters;
    ◦ compare the selected hybrid measurement, called reference hybrid measurement ($MH_{REF}$), to each of the hybrid measurements ($MH_{P1}$,..$MH_{PN}$) delivered by the N first hybridisation filters;
∘ deduce therefrom the identification of the faulty measurement.

2. The system for excluding a faulty satellite measurement according to claim 1, wherein said module (EXC) for excluding a fault in a satellite is further configured to:

• compare the difference between the reference hybrid measurement ($MH_{REF}$) and each of the hybrid measurements ($MH_{P1}$,..$MH_{PN}$) delivered by the N first hybridisation filters to a predetermined detection threshold;
• determine the presence of a faulty measurement from among the group of N-1 measurements (MPS) used by the first hybridisation filters that verify the aforementioned comparison test;
• identify the faulty measurement as that which belongs to the intersection of the groups of N-1 measurements (MPS) comprising a faulty measurement.

3. The system for excluding a faulty satellite measurement according to claim 1 or 2, wherein said module (EXC) for excluding a fault in a satellite is further configured to:

• apply a statistical test of the "RAIM" type to a set of measurements comprising the satellite measurements (MPS) carried out on the signals received by all of the satellites within visibility, with the exception of one satellite, the statistical test being dependent on the error between each measurement of said set and an estimate of each of said measurements;
• detect the presence of a faulty satellite measurement from among the satellite measurements (MPS) of said set according to said statistical test;
• inject, at the input of the M second hybridisation filters ($SFH_1$,..$SFH_M$), as a priority the satellite measurements (MPS) that do not belong to a set in which the presence of a faulty measurement has been detected.

4. The system for excluding a faulty satellite measurement according to any one of the preceding claims, wherein the period for updating a first hybridisation filter is shorter than the period for updating a second hybridisation filter.

5. The system for excluding a faulty satellite measurement in a satellite positioning system, said system comprising:

• a plurality M of hybridisation filters ($SFH_1$,..$SFH_M$) each receiving at least one measurement (MPS) carried out on the signals received by all of the satellites within the visibility of said system and one inertial positioning measurement (MPI), and delivering a corrected positioning measurement, called hybrid measurement ($MH_{S1}$,..$MH_{SM}$), said hybridisation filters being updated, at a constant temporal rhythm, successively at periodically shifted temporal instants;
• a detection module (DET) able to deliver a detection instant of a fault of at least one satellite positioning measurement (MPS);
• a module (EXC) for excluding a faulty satellite positioning measurement, said system being **characterised in that** said exclusion module (EXC) is configured to:

∘ select the oldest hybrid measurement, called reference hybrid measurement, relative to the detection instant of a fault, from among the M up-to-date hybrid measurements ($MH_{S1}$,..$MH_{SM}$) delivered by the M hybridisation filters;
∘ apply a statistical test of the "RAIM" type to a set of measurements comprising, on the one hand, the satellite measurements (MPS) carried out on the signals received by all of the satellites within visibility, with the exception of one satellite, and, on the other hand, the reference hybrid measurement, the statistical test being dependent on the error between each measurement of said set and an estimate of each of said measurements;
∘ detect the presence of a faulty satellite measurement from among the satellite measurements (MPS) of said set according to said statistical test;
∘ repeat the preceding two steps whilst modifying the satellite measurement (MPS) excluded from said set upon each iteration;
∘ deduce therefrom the identification of the faulty measurement.

6. The system for excluding a faulty satellite measurement according to claim 5, wherein said statistical test comprises at least:

• forming a system of equations linking, on the one hand, the satellite measurements (MPS) of said set to the coordinates of the position of the system and, on the other hand, the reference hybrid measurement to the coordinates of the position of the system;
• constructing a residuals vector by applying the least squares algorithm to said system of equations;
• constructing a unique residual on the basis of said residuals vector;
• comparing the unique residual to a predetermined detection threshold.

7. The system for excluding a faulty satellite measurement according to any one of claims 5 to 6, wherein the reference hybrid measurement comprises a position measurement of the system and a measurement of clock bias between a satellite and said system.

8. The system for excluding a faulty satellite measurement according to any one of claims 5 to 7, wherein the set of measurements to which the statistical test is applied further comprises the measurement noise affecting the reference hybrid measurement that is provided by the hybridisation filter that delivered said hybridisation measurement.

9. The system for excluding a faulty satellite measurement according to any one of claims 5 to 8, wherein said module (EXC) for excluding a fault in a satellite is further configured to:

• apply a statistical test of the "RAIM" type to a set of measurements comprising the satellite measurements (MPS) carried out on the signals received by all of the satellites within visibility, with the exception of one satellite, the statistical test being dependent on the error between each measurement of said set and an estimate of each of said measurements;
• detect the presence of a faulty satellite measurement from among the satellite measurements (MPS) of said set according to said statistical test;
• inject, at the input of the M hybridisation filters ($SFH_1,..SFH_M$), as a priority the satellite measurements (MPS) that do not belong to a set in which the presence of a faulty measurement has been detected.

10. The system for excluding a faulty satellite measurement according to any one of the preceding claims, wherein the duration between two successive time instants for updating two second distinct hybridisation filters is substantially equal to the period for updating a second hybridisation filter divided by the number M of second hybridisation filters.

11. The system for excluding a faulty satellite measurement according to any one of the preceding claims, wherein a hybridisation filter is a Kalman filter.

12. A navigation system (SYN2, SYN3) comprising a satellite positioning receiver (GNSS) able to deliver pseudo-distance or positioning measurements (MPS) on the basis of signals transmitted by satellites belonging to a constellation of a satellite positioning system, an inertial unit (UMI, PFV) able to deliver inertial positioning measurements (MPI) and a system for excluding a faulty satellite measurement in a satellite positioning system according to any one of the preceding claims.

EP 2 998 765 B1

COR

SYN

UMI

INC

PFV

MPI

GNSS

MPS

FHP

FHS$_1$

FHS$_2$

FHS$_N$

DET

EXC

FIG.1

FIG.2

EP 2 998 765 B1

FIG.3

EP 2 998 765 B1

FIG.4

EP 2 998 765 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010108938 A

**Littérature non-brevet citée dans la description**

- *Receiver Autonomous Integrity Monitoring,* 39-43